(19) Europäisches Patentamt
European Patent Office
Office européen des brevets

(11) **EP 2 147 717 A1**

(12) **EUROPÄISCHE PATENTANMELDUNG**

(43) Veröffentlichungstag:
**27.01.2010  Patentblatt 2010/04**

(51) Int Cl.:
**B01F 17/00** *(2006.01)*  **C08F 2/20** *(2006.01)*
**C08F 2/24** *(2006.01)*

(21) Anmeldenummer: **09165947.4**

(22) Anmeldetag: **21.07.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **25.07.2008  EP 08161191**

(71) Anmelder: **BASF SE**
**67056 Ludwigshafen (DE)**

(72) Erfinder:
• **Elizalde, Oihana**
  **68159 Mannheim (DE)**
• **Michl, Kathrin**
  **67063 Ludwigshafen (DE)**
• **Venkatesh, Rajan**
  **68167 Mannheim (DE)**

(54) **Dispergierhilfsmittel für die Emulsions- und Suspensionspolymerisation**

(57)  Verwendung eines Polymerisats A, welches in einpolymerisierter Form aufgebaut ist aus

0,1 bis 40 Gew.-%
wenigstens eines C3- bis C30-Alkens,
40 bis 99,9 Gew.-%
wenigstens einer ethylenisch ungesättigten C3- bis C6-Monocarbonsäure,
0 bis 50 Gew.-%
wenigstens einer ethylenisch ungesättigten C4- bis C12-Dicarbonsäure und/oder der daraus zugänglichen ethylenisch ungesättigten Dicarbonsäuremonoalkylester oder Dicarbonsäu- reanhydride, und
0 bis 30 Gew.-%
wenigstens einer anderen ethylenisch ungesättigten Verbin- dung, welche mit den vorgenannten Monomeren copolymeri- sierbar ist,

als Dispergierhilfsmittel bei der radikalisch initiierten wässrigen Emulsions- oder Suspensionspolymerisation.

EP 2 147 717 A1

**Beschreibung**

Der Gegenstand der vorliegenden Erfindung betrifft die Verwendung eines Polymerisats A, welches in einpolymerisierter Form aufgebaut ist aus

| | |
|---|---|
| 0,1 bis 40 Gew.-% | wenigstens eines C3- bis C30-Alkens (Monomer A1), |
| 40 bis 99,9 Gew.-% | wenigstens einer ethylenisch ungesättigten C3- bis C6-Monocarbonsäure (Monomer A2), |
| 0 bis 50 Gew.-% | wenigstens einer ethylenisch ungesättigten C4- bis C12-Dicarbonsäure und/oder der daraus zugänglichen ethylenisch ungesättigten Dicarbonsäuremonoalkylester oder Dicarbonsäureanhydride (Monomer A3), und |
| 0 bis 30 Gew.-% | wenigstens einer anderen ethylenisch ungesättigten Verbindung, welche mit den Monomeren A1 bis A3 copolymerisierbar ist (Monomer A4), |

wobei sich die Monomerenmengen A1 bis A4 zu 100 Gew.-% addieren, als Dispergierhilfsmittel bei der radikalisch initiierten wässrigen Emulsionspolymerisation oder Suspensionspolymerisation.

Die Herstellung und Verwendung von Polymeren, welche aus Alkenen und anderen ethylenisch ungesättigten Monomeren in einpolymerisierter Form aufgebaut sind, sind dem Fachmann hinreichend bekannt. Dabei erfolgt die Copolymerisation im wesentlichen in Form einer Lösungspolymerisation (siehe beispielsweise A. Sen et al., Journal American Chemical Society, 2001, 123, Seiten 12738 bis 12739; B. Klumperman et al., Macromolecules, 2004, 37, Seiten 4406 bis 4416; A. Sen et al., Journal of Polymer Science, Part A: Polymer Chemistry, 2004, 42(24), Seiten 6175 bis 6192; WO 03/042254, WO 03/091297 oder EP-A 1384729) oder in Form einer wässrigen Emulsionspolymerisation, wobei diese insbesondere auf Basis des niedrigsten Alkens Ethen erfolgt (siehe beispielsweise US-A 4,921,898, US-A 5,070,134, US-A 5,110,856, US-A 5,629,370, EP-A 295727, EP-A 757065, EP-A 1114833 oder DE-A 19620817).

In der DE-OS 1720277 wird ein Verfahren zur Herstellung von filmbildenden wässrigen Polymerisatdispersionen unter Verwendung von Vinylestern und 1-Octen offenbart. Dabei kann das Gewichtsverhältnis von Vinylester zu 1-Octen von 99:1 bis 70:30 betragen. Optional können die Vinylester im untergeordneten Maße im Gemisch mit anderen copolymerisierbaren ethylenisch ungesättigten Verbindungen zur Emulsionspolymerisation eingesetzt werden.

S.M. Samoilov beschreibt in J. Macromol. Sci. Chem., 1983, A19(1), Seiten 107 bis 122, die radikalisch initiierte wässrige Emulsionspolymerisation von Propen mit unterschiedlichen ethylenisch ungesättigen Verbindungen. Dabei wurde als Ergebnis festgehalten, dass die Copolymerisation von Propen mit ethylenisch ungesättigten Verbindungen, welche stark elektronenziehende Gruppen aufweisen, wie beispielsweise Chlortrifluorethylen, Trifluoracrylonitril, Maleinsäureanhydrid oder Methyltrifluoracrylat, Polymerisate mit einem deutlich höheren Propenanteil bzw. Copolymerisate mit höheren Molekulargewichten lieferten, als bei Verwendung der bei der radikalisch initiierten wässrigen Emulsionspolymerisation üblichen ethylenisch ungesättigten Verbindungen Vinylacetat, Vinylchlorid, Acrylsäuremethyl- bzw. -butylester. Dieses Verhalten wird insbesondere mit den bei den höheren Alkenen üblichen Wasserstoffradikalübetragungsreaktionen begründet.

Die Herstellung wässriger Polymerisatdispersionen auf Basis unterschiedlicher, extrem wasserunlöslicher Monomerer durch radikalisch initiierte Emulsionspolymerisation unter Verwendung von Wirtsverbindungen wird in US-A 5,521,266 und EP-A 780401 offenbart.

In der DE-A 102005035692 wird die Herstellung von wässrigen Polymerisatdispersionen auf der Basis 5 bis 12 C-Atome aufweisenden Alkenen offenbart. Dabei werden die 5 bis 12 C-Atome aufweisenden Alkene dem Polymerisationsgemisch unter Polymerisationsbedingungen zudosiert.

Gemäß EP-A 891430 werden wässrige Polymersysteme zur Lederhydrophobierung offenbart, welche durch radikalische Polymerisation von 20 bis 90 Gew.-% monoethylenisch ungesättigten C4- bis C6-Dicarbonsäuren bzw. deren Anhydriden mit 5 bis 50 Gew.-% eines C2- bis C6-Olefins und 5 bis 50 Gew.-% eines hydrophoben ethylenisch ungesättigten Monomeren erhalten werden.

Die EP-A 670909 offenbart wässrige Polymerdispersionen, welche als Komponente zur Fettung bzw. Weichmachung von Leder eingesetzt werden und welche durch radikalische Polymerisation von Maleinsäureanhydrid, C12- bis C30-α-Olefinen und Estern von Acrylsäure, Methacrylsäure und/oder Maleinsäure mit C12- bis C30-Alkoholen erhalten werden.

Beschichtungszusammensetzungen auf Basis eines Vernetzers, wie beispielsweise ein endgruppenverschlossenes Polyisocyanat oder ein Aminoplast und eines Emulsionspolymerisats auf Basis von α-Olefinen und ethylenisch ungesättigten Carbonsäureanhydriden, werden in der EP-A 450452 offenbart.

Gemäß E. Witek, A. Kochanowski, E. Bortel, Polish Journal of Applied Chemistry XLVI, No. 3-4, Seiten 177-185 (2002) wird die Verwendung von Copolymeren auf Basis von langkettigen α-Olefinen und hydrophilen Monomeren, wie beispielsweise Acrylsäure und/oder Maleinsäureanhydrid zur Entfernen von Rohölverunreinigungen in Wasser beschrieben.

In einer vom Anmelder beim Europäischen Patentamt eingereichten prioritätsbegründenden Patentanmeldung mit dem Aktenzeichen 07118135.8, wird die Herstellung und die Verwendung von Polymeren A als Komponente in Bindemitteln für faserförmige und/oder körnige Substrate offenbart.

Gemäß der EP-A 450452 wird die Herstellung wässriger Copolymerisat-Dispersionen durch radikalisch initiierte wässrige Emulsionspolymerisation von ethylenisch ungesättigten Monomeren in Anwesenheit von Dispergiermitteln offenbart, welche durch radikalische Polymerisation eines Olefins mit wenigstens 8 Kohlenstoffatomen und eines, eine Carbonsäureanhydridgruppe aufweisenden ethylenisch ungesättigten Monomers und anschließender Basenneutralisation erhalten wurden. Dabei ist die Neutralisation der Dispergierhilfsmittel zwingend erforderlich, um diese von der wasserunlöslichen Anhydridform in die wasserlösliche Carboxylatform zu überführen.

Aufgabe der vorliegenden Erfindung war es, neue Dispergierhilfsmittel für die radikalisch initiierte wässrige Emulsionspolymerisation oder Suspensionspolymerisation bereit zu stellen, welche auch ohne Neutralisation wasserlöslich sind.

Überraschender Weise wurde die Aufgabe durch die eingangs definierte Verwendung gelöst.

Die Durchführung von radikalisch initiierten Emulsionspolymerisationen [vgl. hierzu beispielsweise Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)] oder Suspensionspolymerisationen [vgl. z.B. Encyclopedia of Polymer Science and Engineering, Vol. 16, Seiten 443ff. (1989); High Polymers, Vol. X, Polymer Processes, Interscience Publishers, Inc., Seiten 69ff. (1956); High Polymers, Vol. XXIX, Polymerization Processes, John Wiley & Sons, Inc., Seiten 106ff. (1977); Ullmanns Encyclopädie der technischen Chemie, 4. Aufl., Bd. 19, Seiten 125ff.] von ethylenisch ungesättigten Monomeren in einem wässrigen Medium sind vielfach vorbeschrieben und dem Fachmann daher hinreichend bekannt. Die radikalisch initiierten wässrigen Emulsions- oder Suspensionspolymerisationsreaktionen erfolgen üblicherweise dergestalt, dass man die ethylenisch ungesättigten Monomeren unter Mitverwendung von Dispergierhilfsmitteln, im wässrigen Medium in Form von Monomerentröpfchen dispers verteilt und mittels eines Radikalinitiators polymerisiert. Dabei unterscheiden sich die radikalisch initiierte wässrige Emulsionspolymerisation von der radikalisch initiierten wässrigen Suspensionspolymerisation im Wesentlichen durch die Verwendung eines so genannten wasserlöslichen Radikalinitiators (im Falle der Emulsionspolymerisation) bzw. eines so genannten öllöslichen Radikalinitators (im Falle der Suspensionspolymerisation).

Die im Rahmen der radikalisch initiierten wässrigen Emulsions- oder Suspensionspolymerisation verwendeten Dispergierhilfsmittel sollen dabei sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergierhilfsmittel kommen dabei prinzipiell sowohl Emulgatoren (langkettiger, hydrophober organischer Rest, hydrophile Kopfgruppe; mittleres Molekulargewicht < 1000 g/mol; siehe beispielsweise Houben-Weyl, Methoden der organischen Chemie, Band XIV/1, Makromolekulare Stoffe, Georg-Thieme-Verlag, Stuttgart, 1961, Seiten 192 bis 208) wie auch Schutzkolloide (hydrophile und hydrophobe Struktureinheiten über das polymere Molekül verteilt; mittleres Molekulargewicht > 1000 g/mol; siehe beispielsweise Houben-Weyl, Methoden der organischen Chemie, Band XIV/1, Makromolekulare Stoffe, Georg-Thieme-Verlag, Stuttgart, 1961, Seiten 411 bis 420) in Betracht, welche sowohl micellenbildend und elektrostatisch stabilisierend wirken.

Die vorgenannten Polymerisate A lassen sich erfindungsgemäß vorteilhaft als Dispergierhilfsmittel einsetzen.

Erfindungsgemäß ist das Polymerisat A in einpolymerisierter Form aufgebaut aus

| | |
|---|---|
| 0,1 bis 40 Gew.-% | wenigstens eines Monomeren A1, |
| 40 bis 99,9 Gew.-% | wenigstens eines Monomeren A2, |
| 0 bis 50 Gew.-% | wenigstens eines Monomeren A3, und |
| 0 bis 30 Gew.-% | wenigstens eines Monomeren A4. |

Mit besonderem Vorteil ist das Polymerisat A in einpolymerisierter Form aufgebaut aus

| | |
|---|---|
| 1 bis 25 Gew.-% | wenigstens eines Monomeren A1, |
| 50 bis 89 Gew.-% | wenigstens eines Monomeren A2, und |
| 10 bis 40 Gew.-% | wenigstens eines Monomeren A3 |

und insbesondere vorteilhaft aufgebaut aus

| 5 bis 20 Gew.-% | wenigstens eines Monomeren A1, |
| 55 bis 75 Gew.-% | wenigstens eines Monomeren A2, und |
| 20 bis 35 Gew.-% | wenigstens eines Monomeren A3. |

Als Monomere A 1 kommen C3- bis C30-Alkene, bevorzugt C6- bis C18-Alkene und insbesondere C8- bis C12-Alkene in Betracht, welche sich radikalisch copolymerisieren lassen und welche neben Kohlenstoff und Wasserstoff keine weiteren Elemente aufweisen. Hierzu zählen beispielsweise die linearen Alkene Propen, n-Buten-1, n-Buten-2, 2-Methylpropen, 2-Methylbuten-1, 3-Methylbuten-1, 3,3-Dimethyl-2-isopropylbuten-1, 2-Methylbuten-2, 3-Methylbuten-2, Penten-1, 2-Methylpenten-1, 3-Methylpenten-1, 4-Methylpenten-1, Penten-2, 2-Methylpenten-2, 3-Methylpenten-2, 4-Methylpenten-2, 2-Ethylpenten-1, 3-Ethylpenten-1, 4-Ethylpenten-1, 2-Ethylpenten-2, 3-Ethylpenten-2, 4-Ethylpenten-2, 2,4,4-Trimethylpenten-1, 2,4,4-Trimethylpenten-2, 3-Ethyl-2-methylpenten-1, 3,4,4-Trimethylpenten-2, 2-Methyl-3-ethylpenten-2, Hexen-1, 2-Methylhexen-1, 3-Methylhexen-1, 4-Methylhexen-1, 5-Methylhexen-1, Hexen-2, 2-Methylhexen-2, 3-Methylhexen-2, 4-Methylhexen-2, 5-Methylhexen-2, Hexen-3, 2-Methylhexen-3, 3-Methylhexen-3, 4-Methylhexen-3, 5-Methylhexen-3, 2,2-Dimethylhexen-3, 2,3-Dimethylhexen-2, 2,5-Dimethylhexen-3, 2,5-Dimethylhexen-2, 3,4-Dimethylhexen-1, 3,4-Dimethylhexen-3, 5,5-Dimethylhexen-2, 2,4-Dimethylhexen-1, Hepten-1, 2-Methylhepten-1, 3-Methylhepten-1, 4-Methylhepten-1, 5-Methylhepten-1, 6-Methylhepten-1, Hepten-2, 2-Methylhepten-2, 3-Methylhepten-2, 4-Methylhepten-2, 5-Methylhepten-2, 6-Methylhepten-2, Hepten-3, 2-Methylhepten-3, 3-Methylhepten-3, 4-Methylhepten-3, 5-Methylhepten-3, 6-Methylhepten-3, 6,6-Dimethylhepten-1, 3,3-Dimethylhepten-1, 3,6-Dimethylhepten-1, 2,6-Dimethylhepten-2, 2,3-Dimethylhepten-2, 3,5-Dimethylhepten-2, 4,5-Dimethylhepten-2, 4,6-Dimethylhepten-2, 4-Ethylhepten-3, 2,6-Dimethylhepten-3, 4,6-Dimethylhepten-3, 2,5-Dimethylhepten-4, Octen-1, 2-Methylocten-1, 3-Methylocten-1, 4-Methylocten-1, 5-Methylocten-1, 6-Methylocten-1, 7-Methylocten-1, Octen-2, 2-Methylocten-2, 3-Methylocten-2, 4-Methylocten-2, 5-Methylocten-2, 6-Methylocten-2, 7-Methylocten-2, Octen-3, 2-Methylocten-3, 3-Methylocten-3, 4-Methylocten-3, 5-Methylocten-3, 6-Methylocten-3, 7-Methylocten-3,Octen-4, 2-Methylocten-4, 3-Methylocten-4, 4-Methylocten-4, 5-Methylocten-4, 6-Methylocten-4, 7-Methylocten-4, 7,7-Dimethylocten-1, 3,3-Dimethylocten-1, 4,7-Dimethylocten-1, 2,7-Dimethylocten-2, 2,3-Dimethylocten-2, 3,6-Dimethylocten-2, 4,5-Dimethylocten-2, 4,6-Dimethylocten-2, 4,7-Dimethylocten-2, 4-Ethylocten-3, 2,7-Dimethylocten-3, 4,7-Dimethylocten-3, 2,5-Dimethylocten-4, Nonen-1, 2-Methylnonen-1, 3-Methylnonen-1, 4-Methylnonen-1, 5-Methylnonen-1, 6-Methylnonen-1, 7-Methylnonen-1, 8-Methylnonen-1, Nonen-2, 2-Methylnonen-2, 3-Methylnonen-2, 4-Methylnonen-2, 5-Methylnonen-2, 6-Methylnonen-2, 7-Methylnonen-2, 8-Methylnonen-2, Nonen-3, 2-Methylnonen-3, 3-Methylnonen-3, 4-Methylnonen-3, 5-Methylnonen-3, 6-Methylnonen-3, 7-Methylnonen-3, 8-Methylnonen-3, Nonen-4, 2-Methylnonen-4, 3-Methylnonen-4, 4-Methylnonen-4, 5-Methylnonen-4, 6-Methylnonen-4, 7-Methylnonen-4, 8-Methylnonen-4, 4,8-Dimethylnonen-1, 4,8-Dimethylnonen-4, 2,8-Dimethylnonen-4, Decen-1, 2-Methyldecen-1, 3-Methyldecen-1, 4-Methyldecen-1, 5-Methyldecen-1, 6-Methyldecen-1, 7-Methyldecen-1, 8-Methyldecen-1, 9-Methyldecen-1 Decen-2, 2-Methyldecen-2, 3-Methyldecen-2, 4-Methyldecen-2, 5-Methyldecen-2, 6-Methyldecen-2, 7-Methyldecen-2, 8-Methyldecen-2, 9-Methyldecen-2, Decen-3, 2-Methyldecen-3, 3-Methyldecen-3, 4-Methyldecen-3, 5-Methyldecen-3, 6-Methyldecen-3, 7-Methyldecen-3, 8-Methyldecen-3, 9-Methyldecen-3, Decen-4, 2-Methyldecen-4, 3-Methyldecen-4, 4-Methyldecen-4, 5-Methyldecen-4, 6-Methyldecen-4, 7-Methyldecen-4, 8-Methyldecen-4, 9-Methyldecen-4, Decen-5, 2-Methyldecen-5, 3-Methyldecen-5, 4-Methyldecen-5, 5-Methyldecen-5, 6-Methyldecen-5, 7-Methyldecen-5, 8-Methyldecen-5, 9-Methyldecen-5, 2,4-Dimethyldecen-1, 2,4-Dimethyldecen-2, 4,8-Dimethyldecen-1, Undecen-1, 2-Methylundecen-1, 3-Methylundecen-1, 4-Methylundecen-1, 5-Methylundecen-1, 6-Methylundecen-1, 7-Methylundecen-1, 8-Methylundecen-1, 9-Methylundecen-1, 10-Methylundecen-1, Undecen-2, 2-Methylundecen-2, 3-Methylundecen-2, 4-Methylundecen-2, 5-Methylundecen-2, 6-Methylundecen-2, 7-Methylundecen-2, 8-Methylundecen-2, 9-Methylundecen-2, 10-Methylundecen-2, Undecen-3, 2-Methylundecen-3, 3-Methylundecen-3, 4-Methylundecen-3, 5-Methylundecen-3, 6-Methylundecen-3, 7-Methylundecen-3, 8-Methylundecen-3, 9-Methylundecen-3, 10-Methylundecen-3, Undecen-4, 2-Methylundecen-4, 3-Methylundecen-4, 4-Methylundecen-4, 5-Methylundecen-4, 6-Methylundecen-4, 7-Methylundecen-4, 8-Methylundecen-4, 9-Methylundecen-4, 10-Methylundecen-4, Undecen-5, 2-Methylundecen-5, 3-Methylundecen-5, 4-Methylundecen-5, 5-Methylundecen-5, 6-Methylundecen-5, 7-Methylundecen-5, 8-Methylundecen-5, 9-Methylundecen-5, 10-Methylundecen-5, Dodecen-1, Dodecen-2, Dodecen-3, Dodecen-4, Dodecen-5, Dodecen-6, 4,8-Dimethyldecen-1, 4-Ethyldecen-1, 6-Ethyldecen-1, 8-Ethyldecen-1, 2,5,8-Trimethylnonen-1, Tridecen-1, Tridecen-2, Tridecen-3, Tridecen-4, Tridecen-5, Tridecen-6, 2-Methyldodecen-1, 11-Methyldodecen-1, 2,5-Dimethylundecen-2, 6,10-Dimethylundecen-1, Tetradecen-1, Tetradecen-2, Tetradecen-3, Tetradecen-4, Tetradecen-5, Tetradecen-6, Tetradecen-7, 2-Methyltridecen-1, 2-Ethyldodecen-1, 2,6,10-Trimethylundecen-1, 2,6-Dimethyldodecen-2, 11-Methyltridecen-1, 9-Methyltridecen-1, 7-Methyltridecen-1, 8-Ethyldodecen-1, 6-Ethyldodecen-1, 4-Ethyldodecen-1, 6-Butyldecen-1, Pentadecen-1, Pentadecen-2, Pentadecen-3, Pentadecen-4, Pentadecen-5, Pentadecen-6, Pentadecen-7, 2-Methyltetradecen-1, 3,7,11-Trimethyldodecen-1, 2,6,10-Trimethyldodecen-1, Hexadecen-1, Hexadecen-2, Hexadecen-3, Hexadecen-4, Hexadecen-5, Hexadecen-6, Hexadecen-7, Hexadecen-8, 2-Methylpentadecen-1, 3,7,11-Trimethyltridecen-1, 4,8,12-Trimethyltridecen-1, 11-Methylpentadecen-1, 13-Methylpentadecen-1, 7-Methylpentadecen-1, 9-Methylpentadecen-1, 12-Ethyltetradecen-1, 8-Ethyltetradecen-1, 4-Ethyltetradecen-1, 8-Butyldodecen-1, 6-Butyldodecen-1 Heptadecen-1, Heptadecen-2, Heptadecen-3, Heptadecen-4, Heptadecen-5, Heptadecen-6, Heptadecen-7, Heptadecen-8, 2-Methylhexadecen-1, 4,8,12-Trimethyltetradecen-1, Octadecen-1, Octadecen-2, Octadecen-3, Octadecen-4, Octadecen-5, Octadecen-6, Octadecen-7, Octadecen-8, Octadecen-9, 2-Methylheptadecen-1, 13-Methylheptadecen-1, 10-Butyltetradecen-1, 6-Butyltetradecen-1, 8-Butyltetradecen-1, 10-Ethlyhexadecen-1, Nonadecen-1, Nonadecen-2, 1-Methyloctadecen-1, 7,11,15-Trimethylhexadecen-1, Eicosen-1, Eicosen-2, 2,6,10,14-Tetramethylhexadecen-2, 3,7,11,15-Tetramethylhexadecen-2, 2,7,11,15-Tetramethylhedecen-1, Docosen-1, Docosen-2, Docosen-7, 4,9,13,17-Tetramethyloctadecen-1, Tetracosen-1, Tetracosen-2, Tetracosen-9, Hexacosen-1, Hexacosene-2, Hexacosen-9, Triaconten-1, Dotriaconten-1 oder Tritriaconten-1 sowie die cyclischen Alkene Cyclopenten, 2-Methylcyclopenten-1, 3-Methylcyclopenten-1, 4-Methylcyclopenten-1, 3-Butylcyclopenten-1, Vinylcyclopentan, Cyclohexen, 2-Methylcyclohexen-1, 3-Methylcyclohexen-1, 4-Methylcyclohexen-1, 1,4-Dimethylcyclohexen-1, 3,3,5-Trimethylcyclohexen-1, 4-Cyclopentylcyclohexen-1, Vinylcyclohexan, Cyclohepten, 1,2-Dimethylcyclohepten-1, Cycloocten, 2-Methylcycloocten-1, 3-Methylcycloocten-1, 4-Methylcycloocten-1, 5-Methylcycloocten-1, Cyclononen, Cyclodecen, Cycloundecen, Cyclododecen, Bicyclo[2.2.1]hepten-2, 5-Ethylbicyclo[2.2.1]hepten-2, 2-Methylbicyclo[2.2.2]octen-2, Bicyclo[3.3.1]nonen-2 oder Bicyclo[3.2.2]nonen-6. Selbstverständlich können auch Gemische vorgenannter Monomere A1 bei der Herstellung des Polymerisats A eingesetzt werden.

Bevorzugt werden zur Herstellung des Polymerisats A die 1-Alkene eingesetzt, beispielsweise Propen, 2-Methylpropen, Buten-1, Penten-1, Hexen-1, Hepten-1, Octen-1, Nonen-1, Decen-1, Undecen-1, Dodecen-1, 2,4,4-Trimethylpenten-1, 2,4-Dimethylhexen-1, 6,6-Dimethylhepten-1, 2-Methylocten-1, Tridecen-1, Tetradecen-1, Hexadecen-1, Heptadecen-1, Octadecen-1, Nonadecen-1, Eicosen-1, Docosen-1, Tetracosen-1, 2,6-Dimethyldodecen-1, 6-Butyldecen-1, 4,8,12-Trimethyldecen-1 oder 2-Methylheptadecen-1. Vorteilhaft wird als wenigstens ein Monomer A1 ein 6 bis 18 Kohlensotffatome aufweisendes Alken, bevorzugt ein 8 bis 12 Kohlenstoffatome aufweisendes 1-Alken eingesetzt. Insbesondere bevorzugt werden Octen-1, Nonen-1, Decen-1, Undecen-1 und/oder Dodecen-1 eingesetzt, wobei Octen-1 und Dodecen-1 besonders bevorzugt sind.

Das Polymerisat A enthält in einpolymerisierter Form 0,1 bis 40 Gew.-%, bevorzugt 1 bis 25 Gew.-% und insbesondere bevorzugt 5 bis 20 Gew.-% an Monomeren A1.

Als Monomere A2 kommen alle 3 bis 6 Kohlenstoffatome aufweisende ethylenisch ungesättigte, insbesondere α,β-monoethylenisch ungesättigte Monocarbonsäuren sowie deren wasserlöslichen Salze, insbesondere deren Alkalimetall- oder Ammoniumsalze, wie beispielsweise Acrylsäure, Methacrylsäure, Ethylacrylsäure, Allylessigsäure, Crotonsäure und/oder Vinylessigsäure sowie die Ammonium-, Natrium- oder Kaliumsalze der vorgenannten Säuren in Betracht. Besonders bevorzugt sind Acrylsäure und Methacrylsäure, wobei Acrylsäure insbesondere bevorzugt ist.

Der Gehalt an Monomeren A2 im Polymerisat A beträgt in einpolymerisierter Form 40 bis 99,9 Gew.-%, bevorzugt 50 bis 89 Gew.-% und insbesondere bevorzugt 55 bis 75 Gew.-%.

Als Monomere A3 kommen alle 4 bis 12 Kohlenstoffatome aufweisende ethylenisch ungesättigte, insbesondere α,β-monoethylenisch ungesättigte Dicarbonsäuren sowie deren wasserlöslichen Salze, insbesondere deren Alkalimetall- oder Ammoniumsalze, und/oder die aus den 4 bis 12 Kohlenstoffatomen aufweisenden ethylenisch ungesättigten Dicarbonsäuren zugänglichen ethylenisch ungesättigten Dicarbonsäuremonoalkylester, insbesondere deren C1- bis C6-Monoalkylester, beispielsweise deren Monomethyl-, Monoethyl-, Monopropyl-, Monoisopropyl-, Monobutyl-, Monopentyl- oder Monohexylester sowie die entsprechend zugänglichen Dicarbonsäureanhydride in Betracht, wie beispielsweise Maleinsäure, Fumarsäure, Itakonsäure, Methylmaleinsäure, 1,2,3,6-Tetrahydrophthalsäure sowie die Ammonium-, Natrium- oder Kaliumsalze der vorgenannten Säuren, Maleinsäure-, Fumarsäure-, Itakonsäure-, Methylmaleinsäure-, 1,2,3,6-Tetrahydrophthalsäuremonomethylester, -monoethylester, -monopropylester, Maleinsäureanhydrid, Itakonsäureanhydrid, Methylmaleinsäureanhydrid oder 1,2,3,6-Tetrahydrophthalsäureanhydrid. Besonders bevorzugt sind Maleinsäureanhydrid, Methylmaleinsäureanhydrid, Maleinsäure, Methylmaleinsäure, Maleinsäuremonomethylester, Itakonsäure, Itakonsäureanhydrid, 1,2,3,6-Tetrahydrophthalsäure und/oder 1,2,3,6-Tetrahydrophthalsäureanhydrid, wobei Maleinsäureanhydrid insbesondere bevorzugt ist.

Der Gehalt an Monomeren A3 im Polymerisat A beträgt in einpolymerisierter Form 0 bis 50 Gew.-%, bevorzugt 10 bis 40 Gew.-% und insbesondere bevorzugt 20 bis 35 Gew.-%.

Als Monomere A4 kommen alle diejenigen ethylenisch ungesättigten Verbindungen in Betracht, welche mit den Monomeren A1 bis A3 in einfacher Weise radikalisch copolymerisierbar sind, wie beispielsweise vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, - heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril so-

wie $C_{4-8}$- konjugierte Diene, wie 1,3-Butadien (Butadien) und Isopren. Die genannten Monomere bilden in der Regel die Hauptmonomeren, die, bezogen auf die Gesamtmenge an Monomeren A4, einen Anteil von ≥ 50 Gew.-%, bevorzugt ≥ 80 Gew.-% und insbesondere bevorzugt ≥ 90 Gew.-% auf sich vereinen oder sogar die Gesamtmenge der Monomeren A4 bilden. In aller Regel weisen diese Monomeren in Wasser bei Normalbedingungen [20 ˚C, 1 atm (absolut)] lediglich eine mäßige bis geringe Löslichkeit auf.

Monomere A4, die unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall werden die vorgenannten wasserlöslichen Monomeren A4 lediglich als modifizierende Monomere in Mengen von ≤ 10 Gew.-%, bevorzugt ≤ 5 Gew.-% und insbesondere bevorzugt ≤ 3 Gew.-%, jeweils bezogen auf die Gesamtmenge an Monomeren A4, eingesetzt.

Monomere A4, die üblicherweise die innere Festigkeit der Verfilmungen einer Polymermatrix erhöhen, weisen normalerweise wenigstens eine Epoxy-, wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Häufig werden die vorgenannten vernetzenden Monomeren A4 in Mengen von ≤ 10 zu Gew.-%, bevorzugt jedoch in Mengen von ≤ 3 Gew.-%, jeweils bezogen auf die Gesamtmenge an Monomeren A4, eingesetzt. Insbesondere bevorzugt werden jedoch keinerlei derartige vernetzenden Monomeren A4 zu Herstellung des Polymerisats A eingesetzt.

Der Gehalt an Monomeren A4 im Polymerisat A beträgt in einpolymerisierter Form 0 bis 30 Gew.-% und bevorzugt 0 bis 15 Gew.-%. Mit besonderem Vorteil enthält das Polymerisat A kein Monomer A4 in einpolymerisierter Form.

Bei der Herstellung des erfindungsgemäß verwendeten Polymerisats A ist es möglich, gegebenenfalls jeweils eine Teil- oder die Gesamtmenge der Monomere A1 bis A4 im Polymerisationsgefäß vorzulegen. Es ist aber auch möglich, jeweils die Gesamtmenge oder die jeweils gegebenenfalls verbliebene Restmenge der Monomere A1 bis A4 während der Polymerisationsreaktion zuzudosieren. Die Gesamtmengen oder die gegebenenfalls verbliebenen Restmengen an Monomeren A1 bis A4 können dem Polymerisationsgefäß dabei diskontinuierlich in einer oder mehreren Portionen oder kontinuierlich mit gleichbleibenden oder sich verändernden Mengenströmen zudosiert werden. Häufig wird wenigstens eine Teilmenge der Monomeren A1 und/oder A3 und vorteilhaft ausschließlich Monomer A3 im Polymerisationsmedium vor Initiierung der Polymerisationsreaktion vorgelegt.

Die Herstellung der Polymerisate A ist dem Fachmann im Prinzip geläufig und erfolgt insbesondere durch radikalisch initiierte Lösungspolymerisation beispielsweise in Wasser oder in einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Bevorzugt erfolgt die radikalisch initiierte Lösungspolymerisation der Monomeren A1 bis A4 in einem protischen oder einem aprotischen organischen Lösungsmittel, wobei aprotische Lösungsmittel insbesondere bevorzugt sind. Als aprotische organische Lösungsmittel kommen alle organischen Lösemittel in Frage, welche unter Polymerisationsbedingungen kein ionisierbares Proton im Molekül enthalten bzw. einen pKs-Wert aufweisen, welcher größer als der von Wasser ist. Beispiele für derartige Lösungsmittel sind aromatische Kohlenwasserstoffe, wie Toluol, o-, m-, p-Xylol und Isomerengemische sowie Ethylbenzol, lineare oder cyclische aliphatische Kohlenwasserstoffe, wie Pentan, Hexan, Heptan, Octan, Nonan, Dodecan, Cyclohexan, Cyclooctan, Methylcyclohexan, sowie Mischungen der genannten Kohlenwasserstoffe und Benzinfraktionen, welche keine polymerisierbaren Monomeren enthalten, aliphatische oder aromatische Halogenkohlenwasserstoffe, wie Chloroform, Tetrachlorkohlenstoff, Hexachlorethan, Dichlorethan, Tetrachlorethan, Chlorbenzol sowie flüssige C1- bzw. C2-Fluorchlorkohlenwasserstoffe, aliphatische C2- bis C5-Nitrile, wie Acetonitril, Propionitril, Butyronitril oder Valeronitril, lineare oder cyclische aliphatische C3- bis C7-Ketone, wie Aceton, Methylethylketon, Methylisobutylketon, 2- bzw. 3-Hexanon, 2-, 3- bzw. 4-Heptanon, Cyclopentanon, Cyclohexanon, lineare oder cyclische aliphatische Ether, wie Diisopropylether, 1,3- oder 1,4-Dioxan, Tetrahydrofuran oder Ethylenglykoldimethylether, Carbonate, wie Diethylcarbonat sowie Ester aus aliphatischen C1- bis C5-Carbonsäuren oder aromatischen Carbonsäuren mit aliphatischen C1- bis C5-Alkoholen, wie Ameisensäureethylester, Ameisensäure-n-propylester, Ameisensäureisopropylester, Ameisensäure-n-butylester, Ameisensäureisobutylester, Ameisensäuretert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester Propionsäuremethylester, Propionsäureethylester, Propionsäure-n-propylester, Propionsäureisopropylester, Propionsäuren-butylester, Propionsäureisobutylester, Propionsäure-tert.-butylester, Propionsäureamylester, Buttersäuremethylester, Buttersäureethylester, Buttersäure-n-propylester, Buttersäureisopropylester, Buttersäure-n-butylester, Buttersäureisobutylester, Buttersäure-tert.-butylester, Buttersäureamylester, Valeriansäuremethylester, Valeriansäureethylester, Valeriansäure-n-propylester, Valeriansäureisopropylester, Valeriansäure-n-butylester, Valeriansäureisobutylester, Valeriansäure-tert.-butylester, Valeriansäureamylester, Benzoesäuremethylester oder Benzoesäureethylester sowie Lactone, wie Butyrolacton, Valerolacton oder Caprolacton.

Vorzugsweise werden jedoch solche aprotischen organischen Lösungsmittel ausgewählt, in welchen sich die jeweils eingesetzten Radikalinitiatoren gut lösen. Insbesondere werden solche aprotischen organischen Lösemittel eingesetzt, in denen sich neben den Radikalinitiatoren auch die Polymerisate A gut lösen. Insbesondere bevorzugt werden solche aprotischen organischen Lösungsmittel ausgewählt, welche sich zusätzlich in einfacher Weise, beispielsweise durch Destillation, Inertgasstrippung und/oder Wasserdampfdestillation aus der erhaltenen Polymerisat A-Lösung abtrennen lassen. Bevorzugte Beispiele hierfür sind Ester aus aliphatischen C1- bis C5-Carbonsäuren oder aromatischen Carbonsäuren mit aliphatischen C1- bis C5-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester, Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, lineare oder cyclische aliphatische Ether, wie Diisopropylether, 1,3- oder 1,4-Dioxan, Tetrahydrofuran oder Ethylenglykoldimethylether, Methylglycolacetat, Diethylcarbonat, lineare oder cyclische aliphatische C3- bis C7-Ketone, wie Aceton, Methylethylketon, Methylisobutylketon, 2- bzw. 3-Hexanon, 2-, 3- bzw. 4-Heptanon, Cyclopentanon, oder Cyclohexanon. Besonders bevorzugte Lösungsmittel sind die genannten Ester aus aliphatischen C1- bis C5-Carbonsäuren oder aromatischen Carbonsäuren mit aliphatischen C1- bis C5-Alkoholen, insbesondere jedoch Essigsäureethylester und Buttersäureethylester sowie C4- bis C6-Ketone, insbesondere Methylethylketon. Günstig ist es, wenn das Lösungsmittel bei Atmosphärendruck (1 atm ≙ 1,013 bar absolut) einen Siedepunkt ≤ 140 ˚C, häufig ≤ 125 ˚C und insbesondere ≤ 100 ˚C aufweist oder mit Wasser ein niedrig siedendes Wasser/Lösungsmittel-Azeotropgemisch bildet. Selbstverständlich kann auch eine Mischung mehrerer Lösungsmittel eingesetzt werden.

Die Menge an Lösungsmittel bei der Herstellung des Polymerisats A beträgt 40 bis 9900 Gew.-Teile, bevorzugt 70 bis 400 Gew.-Teile und insbesondere bevorzugt 80 bis 200 Gew.-Teile, jeweils bezogen auf 100 Gew.-Teile Gesamtmonomeren.

Bei der Herstellung des erfindungsgemäß verwendeten Polymerisats A ist es möglich, gegebenenfalls eine Teil- oder die Gesamtmenge an Lösungsmittel im Polymerisationsgefäß vorzulegen. Es ist aber auch möglich, die Gesamtmenge oder die gegebenenfalls verbliebene Restmenge an Lösungsmittel während der Polymerisationsreaktion zuzudosieren. Die Gesamtmenge oder die gegebenenfalls verbliebene Restmenge an Lösungsmittel kann dem Polymerisationsgefäß dabei diskontinuierlich in einer oder mehreren Portionen oder kontinuierlich mit gleichbleibenden oder sich verändernden Mengenströmen zudosiert werden. Vorteilhaft wird eine Teilmenge des Lösungsmittels als Polymerisationsmedium vor Initiierung der Polymerisationsreaktion im Polymerisationsgefäß vorgelegt und die verbliebene Restmenge gemeinsam mit den Monomeren A1 bis A4 und dem Radikalinitiator während der Polymerisationsreaktion zudosiert.

Die radikalische Polymerisation der Monomeren A1 bis A4 wird durch so genannte Radikalinitiatoren initiiert und aufrechterhalten. Als Radikalinitiatoren (radikalbildende Initiatoren) sind vorzugsweise alle diejenigen radikalbildenden Initiatoren geeignet, welche bei Polymerisationstemperatur eine Halbwertszeit ≤ 4 Stunden, insbesondere ≤ 1 Stunde und vorteilhaft ≤ 30 Minuten aufweisen.

Wird die Polymerisation der Monomeren A1 bis A4 in wässrigem Medium durchgeführt, werden so genannte wasserlösliche Radikalinitiatoren, welche der Fachmann üblicherweise bei der radikalisch initiierten wässrigen Emulsionspolymerisation verwendet, eingesetzt. Wird dagegen die Polymerisation der Monomeren in einem organischen Lösungsmittel durchgeführt, werden so genannte öllösliche Radikalinitiatoren, welche der Fachmann üblicherweise bei der radikalisch initiierten Lösungspolymerisation verwendet, eingesetzt.

Als öllösliche Radikalinitiatoren seien beispielhaft genannt Dialkyl- bzw. Diarylperoxide, wie Di-tert.-amylperoxid, Dicumylperoxid, Bis(tert.-butylperoxüsopropyl)benzol, 2,5-Bis(tert.-butylperoxi)-2,5-dimethylhexan, tert.-Butylcumolperoxid, 2,5-Bis(tert.-butylperoxi)-2,5-dimethyl-3-hexen, 1,1-Bis(tert.-butylperoxi)-3,3,5-trimethylcyclohexan, 1,1-Bis(tert.-butylperoxi)cyclohexan, 2,2-Bis(tert.-butylperoxi)butan oder Di-tert.-butylperoxid, aliphatische und aromatische Peroxiester, wie Cumylperoxineodecanoat, 2,4,4-Trimethylpentyl-2-peroxineodecanoat, tert.-Amylperoxineodecanoat, tert.-Butylperoxineodecanoat, tert.-Amylperoxipivalat, tert.-Butylperoxipivalat, tert.-Amylperoxi-2-ethylhexanoat, tert.-Butylperoxi-2-ethylhexanoat, tert.-Butylperoxidiethylacetat, 1,4-Bis(tert.-butylperoxi)cyclohexan, tert.-Butylperoxüsobutanoat, tert.-Butylperoxi-3,5,5-trimethylhexanoat, tert.-Butylperoxiacetat, tert.-Amylperoxibenzoat oder tert.-Butylperoxibenzoat, Dialkanoyl- bzw. Dibenzoylperoxide, wie Diisobutanoylperoxid, Bis(3,5,5-trimethyl-hexanoyl) peroxid, Dilauroylperoxid, Didecanoylperoxid, 2,5-Bis(2-ethylhexanoylperoxi)-2,5-dimethylhexan oder Dibenzoylperoxid, sowie Peroxicarbonate, wie Bis(4-tert.-butylcyclohexyl)peroxidicarbonat, Bis(2-ethylhexyl)peroxidicarbonat, Di-tert.-butylperoxidicarbonat, Diacetylperoxidicarbonat, Dimyristylperoxidicarbonat, tert.-Butylperoxiisopropylcarbonat oder tert.-Butylperoxi-2-ethylhexylcarbonat. Als gut öllösliche Azoinitiatoren finden beispielsweise 2,2'-Azobis(isobutyronitril), 2,2'-Azobis(2,4-dimethylvaleronitril) oder 4,4'-Azobis(4-cyanopentansäure) Verwendung.

Bevorzugt wird als öllöslicher Radikalinitiator eine Verbindung ausgewählt aus der Gruppe umfassend tert.-Butylperoxi-2-ethylhexanoat (Trigonox® 21; Trigonox® Marke der Fa. Akzo Nobel), tert.-Amylperoxi-2-ethylhexanoat (Trigonox® 121), tert.-Butylperoxibenzoat (Trigonox® C), tert.-Amylperoxibenzoat, tert.-Butylperoxiacetat (Trigonox® F), tert.-Butylperoxi-3,5,5-trimethylhexanoat (Trigonox® 42 S), tert.-Butylperoxiisobutanoat, tert.-Butylperoxidiethylacetat (Trigonox® 27), tert.-Butylperoxipivalat (Trigonox® 25), tert.-Butylperoxiisopropylcarbonat, (Trigonox® BPIC), 2,5-Dimethyl-2,5-di(tert.-butylperoxi)hexan (Trigonox® 101), Di-tert.-butylperoxid (Trigonox® B), Cumylhydroperoxid (Trigonox® K) und tert.-Butylperoxi-2-ethylhexylcarbonat (Trigonox® 117) eingesetzt. Selbstverständlich ist es auch möglich, Gemische vorgenannter öllöslicher Radikalinitiatoren einzusetzten.

Die Menge an eingesetztem Radikalinitiators bei der Herstellung des erfindungsgemäß verwendeten Polymerisats A beträgt in der Regel 0,01 bis 10 Gew.-%, bevorzugt 0,1 bis 8 Gew.-% und insbesondere bevorzugt 1 bis 6 Gew.-%, jeweils bezogen auf die Gesamtmonomerenmenge.

Bei der Herstellung des erfindungsgemäß verwendeten Polymerisats A ist es möglich, gegebenenfalls eine Teil- oder die Gesamtmenge an Radikalinitiator im Polymerisationsgefäß vorzulegen. Es ist aber auch möglich, die Gesamtmenge oder die gegebenenfalls verbliebene Restmenge an Radikalinitiator während der Polymerisationsreaktion zuzudosieren. Die Gesamtmenge oder die gegebenenfalls verbliebene Restmenge an Radikalinitiator kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Radikalinitiator während der Polymerisationsreaktion kontinuierlich mit gleichbleibendem Mengenstrom - insbesondere in Form einer Lösung des Radikalinitiators mit dem verwendeten Lösungsmittel.

Vorteilhaft weist Polymerisat A für die erfindungsgemäße Verwendung ein gewichtsmittleres Molekulargewicht ≥ 1000 g/mol und ≤ 100000 g/mol auf. Günstig ist es, wenn das gewichtsmittlere Molekulargewicht von Polymerisat A ≤ 50000 g/mol oder ≤ 40000 g/mol ist. Insbesondere vorteilhaft weist Polymerisat A ein gewichtsmittleres Molekulargewicht ≥ 3000 g/mol und ≤ 40000 g/mol auf. Mit besonderem Vorteil liegt das gewichtsmittleres Molekulargewicht im Bereich ≥ 3000 und ≤ 25000 g/mol. Die Einstellung des gewichtsmittleren Molekulargewichts bei der Herstellung von Polymerisat A ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts ist dem Fachmann geläufig und erfolgt beispielsweise mittels Gelpermeationschromatographie.

Geeignete Radikalkettenregler sind beispielsweise Schwefel in gebundener Form enthaltende organische Verbindungen. Hierzu gehören beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Weitere Radikalkettenregler sind dem Fachmann geläufig. Falls die Polymerisation in Gegenwart von Radikalkettenreglern durchgeführt wird, werden häufig 0,01 bis 10 Gew.-%, bezogen auf die Gesamtmonomerenmenge, verwendet.

Bei der Herstellung des erfindungsgemäß verwendeten Polymerisats A kann wenigstens eine Teilmenge des Radikalkettenreglers im Polymerisationsmedium vorgelegt werden und die gegebenenfalls verbliebene Restmenge dem Polymerisationsmedium nach Initiierung der radikalischen Polymerisationsreaktion diskontinuierlich in einer Portion, diskontinuierlich in mehreren Portionen sowie kontinuierlich mit gleich bleibenden oder sich verändernden Mengenströmen zugegeben werden. Häufig wird die Gesamtmenge des Radikalkettenreglers gemeinsam mit den Monomeren A1 bis A4 während der Polymerisationsreaktion kontinuierlich zugegeben.

Durch gezielte Variation von Art und Menge der Monomeren A1 bis A4 ist es dem Fachmann erfindungsgemäß möglich, Polymerisate A herzustellen, die eine Glasübergangstemperatur bzw. einen Schmelzpunkt im Bereich von -60 bis 270 ˚C aufweisen. Erfindungsgemäß vorteilhaft beträgt die Glasübergangstemperatur des Polymerisats A ≥ -20 ˚C und ≤ 110 ˚C und bevorzugt ≥ 20 ˚C und ≤ 105 ˚C.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

EP 2 147 717 A1

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die erhaltenen Polymerisat-A-Lösungen weisen üblicherweise Polymerisatfeststoffgehalte von $\geq 10$ und $\leq 70$ Gew.-%, häufig $\geq 20$ und $\leq 65$ Gew.-% und oft $\geq 40$ und $\leq 60$ Gew.-%, jeweils bezogen auf die entsprechende Polymerisat-A-Lösung auf.

Die radikalisch initiierte Polymerisation erfolgt - abhängig vom verwendeten Radikalinitiator- üblicherweise bei Temperaturen im Bereich von 40 bis 180 ˚C, vorzugsweise von 50 bis 150 ˚C und insbesondere von 60 bis 110 ˚C. Sobald die Temperatur bei der Polymerisationsreaktion oberhalb des Siedepunktes des Lösungsmittels und/oder einem der Monomeren A1 bis A4 liegt, wird die Polymerisation vorteilhaft unter Druck (> 1 atm absolut) durchgeführt. Die Temperatur- und Druckbedingungen sind dem Fachmann geläufig oder können von diesem in wenigen Routineversuchen ermittelt werden.

Die Herstellung der Polymerisate A kann in den üblichen Polymerisationsvorrichtungen erfolgen. Hierzu verwendet man beispielsweise Glaskolben (Labor) oder Rührkessel (technischer Maßstab), die mit einem Anker-, Blatt-, Impeller-, Kreuzbalken-, MIG- oder Mehrstufenimpulsgegenstromrührer ausgestattet sind. Insbesondere bei der Polymerisation in Anwesenheit lediglich kleiner Mengen an Lösungsmittel kann es auch vorteilhaft sein, die Polymerisation in üblichen ein- oder zweiwelligen (gleich- oder gegenläufig) Kneterreaktoren, wie beispielsweise solchen der Fa. List oder Buss SMS durchzuführen.

Erfolgt die Herstellung von Polymerisat A in einem organischen Lösungsmittel, so wird in der Regel das organische Lösungsmittel zumindest teilweise, vorteilhaft zu $\geq 50$ Gew.-% oder $\geq 90$ Gew.-% und insbesondere vorteilhaft vollständig entfernt und das Polymerisat A in Wasser, vorteilhaft in entionisiertem Wasser aufgenommen. Die entsprechenden Verfahren sind dem Fachmann geläufig. So kann beispielsweise der Austausch des Lösungsmittels gegen Wasser derart erfolgen, dass das Lösungsmittel, beispielsweise bei Atmosphärendruck oder im Unterdruck (< 1 atm absolut) zumindest teilweise, vorteilhaft vollständig in einer oder mehreren Stufen abdestilliert und durch Wasser ersetzt wird. Häufig kann es günstig sein, das Lösungsmittel durch Einleiten von Wasserdampf aus der Lösung zu entfernen und dabei gleichzeitig durch Wasser zu ersetzen. Dies ist insbesondere dann der Fall, wenn das organische Lösungsmittel eine gewisse Wasserdampfflüchtigkeit aufweist.

Die Polymerisate A können erfindungsgemäß in Form von Polymerisatpulvern oder von Lösungen der Polymerisate A in wässrigem Medium oder organischen Lösungsmitteln eingesetzt werden. Mit Vorteil werden Polymerisatpulver oder Lösungen der Polymerisate A in einem wässrigen Medium eingesetzt. Insbesondere werden die Polymerisate A in dem wässrigen Medium eingesetzt, in welchem die Polymerisation der Polymerisate A durchgeführt wurde, oder welches nach Austausch des organischen Lösungsmittels gegen Wasser erhalten wurde.

Die radikalisch initiierten wässrigen Emulsions- oder Suspensionspolymerisationsreaktionen unter der erfindungsgemäßen Verwendung der Polymerisate A erfolgen üblicherweise dergestalt, dass man die ethylenisch ungesättigten Monomeren im wässrigen Medium in Form von Monomerentröpfchen dispers verteilt und mittels eines Radikalinitiators polymerisiert. Dabei unterscheiden sich die radikalisch initiierte wässrige Emulsionspolymerisation von der radikalisch initiierten wässrigen Suspensionspolymerisation im Wesentlichen durch die Verwendung eines so genannten wasserlöslichen Radikalinitiators (im Falle der Emulsionspolymerisation) bzw. eines so genannten öllöslichen Radikalinitators (im Falle der Suspensionspolymerisation). Dabei können alle in der Emulsionspolymerisation oder Suspensionspolymerisation üblichen ethylenisch ungesättigten Monomeren (entsprechend den Monomeren A1 bis A4, insbesondere Mischungen aus Monomeren A4 und in kleinen Mengen Monomeren A2 und/oder A3) erfindungsgemäß eingesetzt werden. Die erfindungsgemäßen Emulsions- oder Suspensionspolymerisationen können nach den gebräuchlichen Fahrweisen, wie beispielsweise die so genannte Batch- bzw. Zulauffahrweise durchgeführt werden. Selbstverständlich ist es auch möglich, dass sich bei der Zulauffahrweise die Zusammensetzung der zugeführten ethylenisch ungesättigen Monomeren ändern und so beispielsweise wässrige Dispersionen von Polymerisaten erhalten werden, welche aus zwei oder mehreren Polymerisatphasen (Polymerisatzusammensetzungen) bzw. aus einer sich ändernden Polymerisatzusammensetzung mit Gradientenverlauf aufgebaut sind. Von Bedeutung ist, dass erfindungsgemäß auch die Verwendung der Polymerisate A als Dispergierhilfsmittel bei der sogenannten Miniemulsionpolymerisation (Monomeren werden unter Verwendung hydrophober Hilfsstoffe im wässrigen Medium in Form von Monomerentröpfen mit einem mittleren Durchmesser ≤ 1000 nm dispergiert und mittels eines öllöslichen oder wasserlöslichen Radikalinitors polymerisiert) als einer spezifischen Ausführungsform von Emulsions- und Suspensionspolymerisation mit umfasst sein soll.

Vorteilhaft an den erfindungsgemäß verwendeten Polymerisaten A ist, dass sie auch ohne Neutralisation eine sehr gute Wasserlöslichkeit aufweisen und so unmittelbar ohne Neutralisation zur Dispergierung bei den wässrigen Emulsions- oder Suspensionspolymerisationen eingesetzt werden können. Mit besonderem Vorteil sind ≤ 50 %, insbesondere ≤ 20 % der Carboxylgruppen des Polymerisats A bei der erfindungsgemäßen Verwendung mittels einer Base neutralisiert, so dass die Polymerisationsreaktionen bei pH-Werten im Bereich ≤ 7, insbesondere ≥ 1 und ≤ 6 und vorteilhaft ≥ 1 und ≤ 4 durchgeführt werden können. Dabei erfolgt die pH-Wertbestimmung bei 23 ˚C mittels eines geeichten, handelsüblichen pH-Meters. Als Base können alle dem Fachmann geläufige basische Verbindungen, wie insbesondere Alkalimetall- und Erdalkalimetallhydroxide, -carbonate oder -hydrogencarbonate, wie beispielsweise Natriumhydroxid, Kaliumhydroxid, Calciumhydroxid, Natriumhydrogencarbonat, Kaliumhydrogencarbonat, Natriumcarbonat, Kaliumcarbonat, oder aber auch Ammoniak sowie primäre, sekundäre oder tertiäre Amine, wie beispielsweise Ethylamin, Diethanolamin oder Triethanolamin, eingesetzt werden. Selbstverständlich ist es prinzipiell auch möglich, die Polymerisationsreaktionen auch bei pH-Werten im Bereich ≥ 7 durchzuführen. Darüber hinaus ist es selbstverständlich auch möglich, die nach der Emulsions- oder Suspensionspolymerisation erhaltenen wässrigen Polymerisatsysteme mittels einer Base auf einen pH-Wert ≥ 7 einzustellen, ohne dass dies nachteilige Folgen auf die wässrigen Polymerisatsysteme hat.

Erfindungsgemäß werden 0,1 bis 150 Gew.-%, vorteilhaft 10 bis 130 Gew.-% und insbesondere vorteilhaft 20 bis 110 Gew.-% an Polymerisat A (als Feststoff gerechnet), bezogen auf die bei der radikalisch initiierten wässrigen Emulsionspolymerisation oder Suspensionspolymerisation verwendeten Gesamtmonomerenmenge, eingesetzt.

Erfindungsgemäß ist es möglich, dass neben den Polymerisaten A auch noch andere Dispergierhilfsmittel, wie Emulgatoren und/oder andere Schutzkolloide eingesetzt werden, sofern diese mit den Polymerisaten A verträglich sind, was im Zweifelsfall anhand weniger Vorversuche überprüft werden kann. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Die Menge an optional neben den Polymerisaten A bei der Emulsions- oder Suspensionspolymerisation verwendeten Emulgatoren und/oder anderen Schutzkolloiden beträgt 0,1 bis 5 Gew.-%, häufig 0,5 bis 3 Gew.-% und oft 1 bis 2 Gew.-%, jeweils bezogen auf die bei der radikalisch initiierten wässrigen Emulsionspolymerisation oder Suspensionspolymerisation verwendeten Gesamtmonomerenmenge. Mit besonderem Vorteil werden jedoch außer den Polymerisaten A keine weiteren Dispergierhilfsmittel eingesetzt.

Erfindungsgemäß kann die Gesamtmenge des Polymerisats A bei der radikalisch initiierten wässrigen Emulsions- oder Suspensionspolymerisation im wässrigen Polymerisationsmedium vor Initiierung der Polymerisationsreaktion vorgelegt werden. Es ist aber auch möglich, gegebenenfalls lediglich eine Teilmenge des Polymerisats A im wässrigen Polymerisationsmedium vor Initiierung der Polymerisationsreaktion vorzulegen und dann unter Polymerisationsbedingungen während der erfindungsgemäßen radikalischen Emulsions- oder Suspensionspolymerisation die Gesamtmenge bzw. die gegebenenfalls verbliebene Restmenge diskontinuierlich in einer oder mehreren Portionen oder kontinuierlich mit gleich bleibenden oder sich ändernden Mengenströmen, insbesondere gemeinsam und parallel zu den zu polymerisierenden ethylenisch ungesättigten Monomeren zuzugeben. Mit besonderem Vorteil wird eine Teilmenge des Polymerisats A im wässrigen Polymerisationsmedium vor Initiierung der Polymerisationsreaktion im wässrigen Polymerisationsmedium vorgelegt und die verbliebene Restmenge des Polymerisats A nach Auslösung der Polymerisation parallel zu den zu polymerisierenden ethylenisch ungesättigten Monomeren zugegeben.

Unter Initiierung der Polymerisationsreaktion wird der Start der Polymerisationsreaktion der im wässrigen Polymerisationsmedium vorliegenden Monomeren nach Radikalbildung des Radikalinitiators verstanden. Dabei kann die Initiierung der Polymerisationsreaktion durch Zugabe von Radikalinitiator zum wässrigen Polymerisationsmedium im Polymerisationsgefäß unter Polymerisationsbedingungen erfolgen. Es ist aber auch möglich, dass eine Teil- oder die Gesamtmenge des Radikalinitiators alleine oder gemeinsam mit einer Teilmenge der ethylenisch ungesättigten Monomeren im wässrigen Polymerisationsmedium im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsmedium Polymerisationsbedingungen eingestellt werden. Unter Polymerisationsbedingungen sind dabei generell diejenigen Temperaturen und Drücke zu verstehen, unter denen die radikalisch initiierte wässrige Emulsions- oder Suspensionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so ausgewählt, dass immer genügend Startradikale zur Verfügung stehen, um die Polymerisationsreaktion zu initiieren bzw. aufrechtzuerhalten.

Als Reaktionstemperatur für die erfindungsgemäße radikalische wässrige Emulsions- oder Suspensionspolymerisation kommt der gesamte Bereich von 0 bis 170 ˚C in Betracht. Dabei werden in der Regel Temperaturen von 50 bis 120 ˚C, häufig 60 bis 110 ˚C und oft 70 bis 100 ˚C angewendet. Die erfindungsgemäße radikalische wässrige Emulsions- oder Suspensionspolymerisation kann bei einem Druck kleiner, gleich oder größer Atmosphärendruck durchgeführt werden, so dass die Polymerisationstemperatur 100 ˚C übersteigen und bis zu 170 ˚C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden die Polymerisationsreaktionen im Unterdruck durchgeführt, werden Drücke von 950 mbar, häufig von 900 mbar und oft 850 mbar (absolut) eingestellt. Vorteilhaft wird die erfindungsgemäße radikalische wässrige Emulsions- oder Suspensionspolymerisation bei Atmosphärendruck unter Sauerstoffausschluss, beispielsweise unter Inertgasatmosphäre, wie beispielsweise unter Stickstoff oder Argon durchgeführt.

Durch die erfindungsgemäße Verwendung der Polymerisate A als Dispergierhilfsmittel bei der radikalisch initiierten wässrigen Emulsionspolymerisation oder Suspensionspolymerisation können diese direkt ohne Neutralisation eingesetzt werden, weswegen auch Polymerisationsreaktionen im stark sauren Bereich möglich sind. Darüber hinaus werden bei Verwendung von Polymerisaten A als Dispergierhilfsmittel, im Vergleich zu Dispergierhilfsmitteln, welche neben Monomeren A2 bzw. Monomeren A2 und A3 keine Monomere A1 in einpolymerisierter Form enthalten, bei der radikalisch initiierten wässrigen Emulsionspolymerisation oder Suspensionspolymerisation niedrigere Koagulatgehalte erhalten. Desweiteren weisen die unter Verwendung der Polymerisate A erhaltenen wässrigen Polymerisatdispersionen in der Regel deutlich geringere Viskositäten auf.

Die Erfindung soll anhand nachfolgender nicht einschränkender Beispiele erläutert werden.

Beispiele

A. Herstellung des Polymerisats A

Polymerisat A1

In einen 2 1-Vierhalskolben, ausgerüstet mit einem Anker-Rührer, Rückflusskühler und drei Dosiereinrichtungen, wurden bei 20 bis 25 ˚C (Raumtemperatur) unter Stickstoffatmosphäre 200 g Methylethylketon (MEK) und 51,3 g Maleinsäureanhydrid (MSA) vorgelegt. Daran anschließend wurde die Vorlagenlösung unter Rühren auf 82 ˚C aufgeheizt und zeitgleich beginnend Zulauf 1 innerhalb von 3 Stunden, Zulauf 2 innerhalb von 5 Stunden und Zulauf 3 innerhalb von 5,5 Stunden kontinuierlich mit gleich bleibenden Mengenströmen zudosiert. Daran anschließend ließ man die Reaktionsmischung noch 2 Stunden bei vorgenannter Temperatur nachpolymerisieren und kühlte dann die erhaltene Polymerlösung auf Raumtemperatur ab.

Zulauf 1:

| | |
|---|---|
| 120 g | MSA (in geschmolzener Form) |

Zulauf 2:

| | |
|---|---|
| 376 g | Acrylsäure (AS) |
| 96,5 g | 1-Octen und |
| 217 g | MEK |

Zulauf 3:

| | |
|---|---|
| 42,9 g | einer 75 gew.-%igen Lösung von tert.-Butylperpivalat in einem aromatenfreien Kohlenwasserstoffgemisch und |
| 184 g | MEK |

Daran anschließend verdünnte man 1200 g der erhaltenen organischen Polymerisatlösung mit 700 g entionisiertem Wasser und destillierte am Rotationsverdampfer bei 80 ˚C Badtemperatur solange Wasser/MEK ab, bis ein Innendruck von 20 mbar (absolut) erreicht war. Danach stellte man durch Zugabe von entionisiertem Wasser ein Festoffgehalt von 42,6 Gew.-% ein. Der K-Wert von des Polymerisats A wurde zu 15,0 und das gewichtsmittlere Molekulargewicht zu 11700 g/mol bestimmt.

Der Feststoffgehalt wurde generell bestimmt, indem eine Probe von ca. 1 g in einem Umluft-Trockenschrank für zwei Stunden bei 120 ˚C getrocknet wurde. Es wurden jeweils zwei separate Messungen durchgeführt. Die in den Beispielen A und B angegebenen Werte stellen Mittelwerte der beiden Messergebnisse dar.

Der K-Wert des Polymerisats A wurde nach Fikentscher (ISO 1628-1) mittels einer 1 gew.-%igen Polymerlösung bestimmt.

Die Ermittlung des gewichtsmittleren Molekulargewichts des Polymerisats A erfolgte mittels Gelpermeationschromatographie (Linearsäule: Supremea M der Fa. PSS, E-luens: 0,08 mol/l TRIS-Puffer pH 7,0, entionisiertes Wasser, Flüssigkeitsstrom: 0,8 ml/min, Detektor: Differentialrefraktometer ERC 7510 der Fa. ERC).

Vergleichspolymerisat VA

Die Herstellung des Vergleichspolymerisats VA erfolgte analog der Herstellung von Polymerisat A1, mit dem Unterschied, dass in Zulauf 2 kein 1-Octen, dafür aber 472,5 g AS eingesetzt wurden.

Der K-Wert von des Vergleichspolymerisats VA wurde zu 16,5 und das gewichtsmittlere Molekulargewicht zu 12500 g/mol bestimmt.

B. Herstellung einer wässrigen Polymerisatdispersion

Polymerisatdispersion B1

In einen 5-1-Reaktor mit Ankerrührer, Heiz- und Kühleinrichtungen sowie verschiedenen Dosiereinrichtungen wurde bei Raumtemperatur unter Stickstoffatmosphäre die Vorlage eingefüllt, unter Rühren auf 90 ˚C aufgeheizt und anschließend bei dieser Temperatur gehalten. Danach dosierte man 0,6 g des Zulaufs 2 innerhalb einer Minute in das wässrige Polymerisationsmedium und rührte die erhaltene Mischung für 5 Minuten. Daran anschließend wurden die Gesamtmengen der Zuläufe 1 und 3 sowie die Restmenge von Zulauf 2 zeitgleich beginnend innerhalb von 3 Stunden mit gleich bleibenden Mengenströmen dem wässrigen Reaktionsmedium zudosiert. Im Anschluss daran wurde Zulauf 4 innerhalb von 30 Minuten mit gleich bleibendem Mengenstrom zudosiert und daran anschließend für 30 Minuten bei 90 ˚C nachpolymerisiert. Danach wurde die Temperatur auf 70 ˚C erniedrigt und zeitgleich beginnend die Zuläufe 5 und 6 über einen Zeitraum von 60 Minuten mit gleich bleibenden Mengeströmen zudosiert. Daran anschließend wurde die erhaltene wässrige Polymerisatdispersion auf Raumtemperatur abgekühlt und über ein 125 μm Filter filtriert.

Vorlage:

| | |
|---|---|
| 152 | g entionisiertes Wasser |
| 7,0 g | der 42,6 gew-%igen wässrigen Lösung des Polymerisats A1 |

Zulauf 1:

| | |
|---|---|
| 700 g | der 42,6 gew-%igen wässrigen Lösung des Polymerisats A1 |

Zulauf 2:

| | |
|---|---|
| | 12,0 g entionisiertes Wasser |
| 0,9 g | Natriumpersulfat |

Zulauf 3:

| | |
|---|---|
| 135 g | n-Butylacrylat |
| 150 g | Styrol |
| 15,0 g | 2-Hydroxyethylacrylat |

Zulauf 4:

| | |
|---|---|
| 8,0 | g entionisiertes Wasser |
| 0,6 g | Natriumpersulfat |

Zulauf 5:

| | |
|---|---|
| 9,0 g | einer 10 gew.-%igen wässrigen Lösung von tert.-Butylhydroperoxid |

Zulauf 6:

| | |
|---|---|
| 8,8 g | einer 13,3 gew.-%igen wässrigen Lösung eines 1:1-Umsetzungsproduktes aus Aceton und Natriumhydrogensulfit |

Die erhaltene wässrige Polymerisatdispersion B1 wies einen pH-Wert von 1,6 auf. Der Feststoffgehalt wurde zu 49,6 Gew.-%, die Viskosität zu 1098 mPas, die mittlere Teilchengröße zu 246 nm und der Koagulatgehalt zu 0,01 Gew.-% bestimmt.

Der pH-Wert wurde generell mittels eines handylab 1 pH-Meters der Fa. Schott bei 23 ˚C bestimmt.

Die Viskosität der wässrigen Polymerisatdispersionen wurde generell gemäß DIN 53019 mit einem Rheomat der Fa. Physika bei 23 ˚C und einer Schergeschwindigkeit von 250 $s^{-1}$ bestimmt.

Die Bestimmung der mittleren Teilchengröße erfolgte generell nach der Methode der quasielastischen Lichtstreuung (DIN-ISO 13321) mit einem High Performance Particle Sizer (HPPS) der Fa. Malvern Instrumensts Ltd..

Der Koagulatgehalt wurde generell bestimmt, indem das 125 $\mu$m Filter nach der Filtration mit 100 ml entionisiertem Wasser gespült und anschließend 30 Minuten bei 140 ˚C im Trockenschrank getrocknet wurde. Die jeweils angegebenen Werte beziehen sich auf den Feststoffgehalt der jeweiligen Polymerisatdispersion.

Vergleichspolymerisatdispersion VB1

Die Herstellung der wässrigen Vergleichspolymerisatdispersion VB1 erfolgte völlig analog der Herstellung der wässrigen Polymerisatdispersion B1, mit dem Unterschied, dass die 42,6 gew-%ige wässrige Lösung des Polymerisats A1 vollständing durch die 42,6 gew-%ige wässrige Lösung des Vergleichspolymerisats VA ersetzt wurde.

Die erhaltene wässrige Vergleichspolymerisatdispersion VB1 wies einen pH-Wert von 1,7 auf. Der Feststoffgehalt wurde zu 49, Gew.-%, die Viskosität zu 1254 mPas, die mittlere Teilchengröße zu 291 nm und der Koagulatgehalt zu 0,6 Gew.-% bestimmt.

Polymerisatdispersion B2

Die Herstellung der wässrigen Polymerisatdispersion B2 erfolgte völlig analog der Herstellung der wässrigen Polymerisatdispersion B1, mit dem Unterschied, dass folgende Monomerenmischung als Zulauf 3 eingesetzt wurde:

Zulauf 3:

| | |
|---|---|
| 129 g | n-Butylacrylat |
| 141 g | Styrol |
| 15,0 g | 2-Hydroxyethylacrylat |
| 15,0 g | Glycidylmethacrylat |

Die erhaltene wässrige Polymerisatdispersion B2 wies einen pH-Wert von 1,6 auf. Der Feststoffgehalt wurde zu 49,8 Gew.-%, die Viskosität zu 1970 mPas, die mittlere Teilchengröße zu 249 nm und der Koagulatgehalt zu 0,03 Gew.-% bestimmt.

Vergleichspolymerisatdispersion VB2

Die Herstellung der wässrigen Vergleichspolymerisatdispersion VB2 erfolgte völlig analog der Herstellung der wässrigen Polymerisatdispersion B2, mit dem Unterschied, dass die 42,6 gew-%ige wässrige Lösung des Polymerisats A1 vollständing durch die 42,6 gew-%ige wässrige Lösung des Vergleichspolymerisats VA ersetzt wurde.

Die erhaltene wässrige Vergleichspolymerisatdispersion VB2 wies einen pH-Wert von 1,6 auf. Der Feststoffgehalt wurde zu 48,4 Gew.-%, die Viskosität zu 2320 mPas, die mittlere Teilchengröße zu 309 nm und der Koagulatgehalt zu 0,7 Gew.-% bestimmt.

**Patentansprüche**

1. Verwendung eines Polymerisats A, welches in einpolymerisierter Form aufgebaut ist aus

| | |
|---|---|
| 0,1 bis 40 Gew.-% | wenigstens eines C3- bis C30-Alkens (Monomer A1), |
| 40 bis 99,9 Gew.-% | wenigstens einer ethylenisch ungesättigten C3- bis C6-Monocarbonsäure (Monomer A2), |
| 0 bis 50 Gew.-% | wenigstens einer ethylenisch ungesättigten C4- bis C12-Dicarbonsäure und/oder der daraus zugänglichen ethylenisch ungesättigten Dicarbonsäuremonoalkylester oder Dicarbonsäureanhydride (Monomer A3), und |
| 0 bis 30 Gew.-% | wenigstens einer anderen ethylenisch ungesättigten Verbindung, welche mit den Monomeren A1 bis A3 copolymerisierbar ist (Monomer A4), |

wobei sich die Monomerenmengen A1 bis A4 zu 100 Gew.-% addieren, als Dispergierhilfsmittel bei der radikalisch initiierten wässrigen Emulsionspolymerisation oder Suspensionspolymerisation.

2. Verwendung nach Anspruch 1, wobei 0,1 bis 150 Gew.-% Polymerisat A, bezogen auf die bei der radikalisch initiierten wässrigen Emulsionspolymerisation oder Suspensionspolymerisation verwendeten Gesamtmonomerenmenge, eingesetzt werden.

3. Verwendung nach einem der Ansprüche 1 oder 2, wobei das Polymerisat A in einpolymerisierter Form aufgebaut ist aus

| | |
|---|---|
| 1 bis 25 Gew.-% | Monomere A1, |
| 50 bis 89 Gew.-% | Monomere A2, und |
| 10 bis 40 Gew.-% | Monomere A3. |

4. Verwendung nach einem der Ansprüche 1 bis 3, wobei die Monomeren A1 ausgewählt sind aus 1-Alkenen mit 6 bis 18 Kohlenstoffatomen.

5. Verwendung nach einem der Ansprüche 1 bis 4, wobei die Monomeren A2 ausgewählt sind aus Acrylsäure, Methacrylsäure, Ethylacrylsäure, Allylessigsäure, Crotonsäure und/oder Vinylessigsäure.

6. Verwendung nach einem der Ansprüche 1 bis 5, wobei die Monomeren A3 ausgewählt sind aus Maleinsäureanhydrid, Methylmaleinsäureanhydrid, Maleinsäure, Methylmaleinsäure, Maleinsäuremonomethylester, Itakonsäure, Itakonsäureanhydrid, 1,2,3,6-Tetrahydrophthalsäure und/oder 1,2,3,6-Tetrahydrophthalsäureanhydrid.

7. Verwendung nach einem der Ansprüche 1 bis 6, wobei das Polymerisat A ein gewichtsmittleres Molekulargewicht $\geq$ 3000 g/mol und $\leq$ 40000 g/mol aufweist.

8. Verwendung nach einem der Ansprüche 1 bis 7, wobei $\leq$ 50 % der Carboxylgruppen des Polymerisats A mittels einer Base neutralisiert sind.

Europäisches
Patentamt

European
Patent Office

Office européen
des brevets

**EUROPÄISCHER RECHERCHENBERICHT**

Nummer der Anmeldung

EP 09 16 5947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 645 576 A (MITSUBISHI CHEM CORP [JP]) 12. April 2006 (2006-04-12) * das ganze Dokument * ----- | 1-8 | INV. B01F17/00 C08F2/20 C08F2/24 |
| D,A | DE 196 12 986 A1 (BASF AG [DE]) 2. Oktober 1997 (1997-10-02) * das ganze Dokument * ----- | 1-8 | |
| A | WO 2007/012616 A (BASF AG [DE]; VENKATESH RAJAN [DE]) 1. Februar 2007 (2007-02-01) * das ganze Dokument * ----- | 1-8 | |

RECHERCHIERTE
SACHGEBIETE (IPC)

B01F
C08F

Der vorliegende Recherchenbericht wurde für alle Patentansprüche erstellt

| Recherchenort | Abschlußdatum der Recherche | Prüfer |
|---|---|---|
| München | 28. Oktober 2009 | Gold, Josef |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.............................................................................................
& : Mitglied der gleichen Patentfamilie, übereinstimmendes
Dokument

EPO FORM 1503 03.82 (P04C03)

**EP 2 147 717 A1**

**ANHANG ZUM EUROPÄISCHEN RECHERCHENBERICHT**
**ÜBER DIE EUROPÄISCHE PATENTANMELDUNG NR.**          EP 09 16 5947

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2009

| Im Recherchenbericht angeführtes Patentdokument | | Datum der Veröffentlichung | Mitglied(er) der Patentfamilie | | Datum der Veröffentlichung |
|---|---|---|---|---|---|
| EP 1645576 | A | 12-04-2006 | CN | 1823104 A | 23-08-2006 |
| | | | WO | 2005005503 A1 | 20-01-2005 |
| | | | US | 2006178486 A1 | 10-08-2006 |
| DE 19612986 | A1 | 02-10-1997 | AU | 736657 B2 | 02-08-2001 |
| | | | AU | 2292697 A | 22-10-1997 |
| | | | BR | 9708491 A | 03-08-1999 |
| | | | WO | 9737046 A1 | 09-10-1997 |
| | | | EP | 0891430 A1 | 20-01-1999 |
| | | | ES | 2140227 T3 | 16-02-2000 |
| | | | JP | 2000507628 T | 20-06-2000 |
| | | | KR | 20000005161 A | 25-01-2000 |
| | | | MX | PA98008034 A | 24-08-2004 |
| | | | PT | 891430 E | 28-04-2000 |
| | | | TR | 9801967 T2 | 21-12-1998 |
| | | | US | 6200640 B1 | 13-03-2001 |
| WO 2007012616 | A | 01-02-2007 | AT | 432295 T | 15-06-2009 |
| | | | DE | 102005035692 A1 | 01-02-2007 |
| | | | EP | 1910423 A1 | 16-04-2008 |
| | | | ES | 2324372 T3 | 05-08-2009 |
| | | | US | 2008221267 A1 | 11-09-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03042254 A
- WO 03091297 A
- EP 1384729 A
- US 4921898 A
- US 5070134 A
- US 5110856 A
- US 5629370 A
- EP 295727 A
- EP 757065 A
- EP 1114833 A
- DE 19620817 A
- DE OS1720277 A
- US 5521266 A
- EP 780401 A
- DE 102005035692 A
- EP 891430 A
- EP 670909 A
- EP 450452 A
- DE 4003422 A

**In der Beschreibung aufgeführte Nicht-Patentliteratur**

- **A. Sen et al.** *Journal American Chemical Society,* 2001, vol. 123, 12738-12739
- **B. Klumperman et al.** *Macromolecules,* 2004, vol. 37, 4406-4416
- **A. Sen et al.** *Journal of Polymer Science, Part A: Polymer Chemistry,* 2004, vol. 42 (24), 6175-6192
- *J. Macromol. Sci. Chem.,* 1983, vol. A19 (1), 107-122
- **E. Witek ; A. Kochanowski ; E. Bortel.** *Polish Journal of Applied Chemistry,* 2002, vol. XLVI (3-4), 177-185
- Encyclopedia of Polymer Science and Engineering. 1987, vol. 8, 659 ff
- **D.C. Blackley.** *High Polymer Latices,* 1966, vol. 1, 35 ff
- **H. Warson.** The Applications of Synthetic Resin Emulsions. 1972, 246 ff
- **D. Diederich.** *Chemie in unserer Zeit,* 1990, vol. 24, 135-142
- Emulsion Polymerisation. Interscience Publishers, 1965
- **F. Hölscher.** Dispersionen synthetischer Hochpolymerer. Springer-Verlag, 1969
- Encyclopedia of Polymer Science and Engineering. 1989, vol. 16, 443ff
- High Polymers. Polymer Processes. Interscience Publishers, Inc, 1956, vol. X, 69ff
- High Polymers. Polymerization Processes. John Wiley & Sons, Inc, 1977, vol. XXIX, 106ff
- Ullmanns Encyclopädie der technischen Chemie. vol. 19, 125ff
- Methoden der organischen Chemie. **Houben-Weyl.** Makromolekulare Stoffe. Georg-Thieme-Verlag, 1961, vol. XIV/1, 192-208
- Methoden der organischen Chemie. **Houben-Weyl.** Makromolekulare Stoffe. Georg-Thieme-Verlag, 1961, vol. XIV/1, 411-420
- **A. Echte.** Handbuch der Technischen Polymerchemie. VCH, 1993
- **B. Vollmert.** Grundriss der Makromolekularen Chemie. E. Vollmert Verlag, 1988, vol. 1
- **G. Kanig.** *Kolloid-Zeitschrift & Zeitschrift für Polymere,* vol. 190, 1
- **T.G. Fox.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. 5, A21, 169
- **J. Brandrup ; E.H. Immergut.** Polymer Handbook. J. Wiley, 1966
- POLYMER HANDBOOK. J.Wiley, 1975
- POLYMER HANDBOOK. J. Wiley, 1989